Europäisches Patentamt

European Patent Office

Office européen des brevets

(11) Publication number: **0 066 146**
**B1**

## EUROPEAN PATENT SPECIFICATION

(45) Date of publication of patent specification: **28.03.90**

(51) Int. Cl.⁵: **G 11 B 5/84, H 01 F 41/20**

(21) Application number: **82104203.3**

(22) Date of filing: **13.05.82**

(54) Method for manufacturing magnetic recording medium.

(30) Priority: **15.05.81 JP 73710/81**
**19.05.81 JP 76242/81**
**14.12.81 JP 202215/81**
**08.02.82 JP 19232/82**

(43) Date of publication of application:
**08.12.82 Bulletin 82/49**

(45) Publication of the grant of the patent:
**28.03.90 Bulletin 90/13**

(84) Designated Contracting States:
**DE FR GB**

(56) References cited:
**EP-A-0 053 811**
**US-A-3 342 632**
**PATENTS ABSTRACTS OF JAPAN, vol. 4, no.**
**7(C-70), 19th January 1980, page 43C70; & JP - A**
**- 54 141 391 (MATSUSHITA DENKI SANGYO**
**K.K.) 02-11-1979**
**PATENTS ABSTRACTS OF JAPAN, vol. 2, no. 96,**
**11th August 1978, page 4676E78; & JP - A - 53**
**61310 (MATSUSHITA DENKI SANGYO K.K.)**
**01-06-1978**
**PATENTS ABSTRACTS OF JAPAN, vol. 1, no. 52,**
**20th May 1977, page 3505E76; & JP - A - 51 149**
**008 (FUJI SHASHIN FILM K.K.) 21-12-1976**

(73) Proprietor: **Matsushita Electric Industrial Co.,**
**Ltd.**
**1006, Oaza Kadoma**
**Kadoma-shi Osaka-fu, 571 (JP)**

(72) Inventor: **Sugita, Ryuji**
**8-7, Ogura-cho**
**Hirakata-shi Osaka (JP)**
Inventor: **Kunieda, Toshiaki**
**4-2-10, Hyakurakuso**
**Minoo-shi Osaka (JP)**

(74) Representative: **Sandmair, Kurt, Dr. et al**
**Patentanwälte Schwabe, Sandmair, Marx**
**Stuntzstrasse 16**
**D-8000 München 80 (DE)**

(56) References cited:
**PATENTS ABSTRACTS OF JAPAN, vol. 5, no.**
**64(P-59)(736), 30th April 1981; & JP - A - 56**
**16941 (TOKYO DENKI KAGAKU KOGYO K.K.)**
**18-02-1981**
**PATENTS ABSTRACTS OF JAPAN, vol. 5, no.**
**88(P-65)(760), 9th June 1981; & JP - A - 56 34151**
**(TOKYO DENKI KAGAKU KOGYO K.K.) 06-04-**
**1981**

Courier Press, Leamington Spa, England.

## Description

The present invention relates to a method for manufacturing a vertical magnetic recording medium, comprising a magnetic film on a substrate, said magnetic film containing Co and Cr as major constituents and having an axis of easy magnetization normal to the surface thereof, using a vapor deposition method with travelling substrate.

A vertical recording system is one of the excellent magnetic recording systems and has excellent short wavelength recording characteristics. In the vertical recording system, a vertically magnetizable recording medium with an axis of easy magnetization extending in the direction perpendicular to a film surface thereof is required. When a signal is recorded on this medium, residual magnetization is oriented in the direction perpendicular to the film surface. Therefore, when a signal of a shorter wavelength is recorded, a demagnetizing field in the medium is reduced, resulting in an excellent reproduction output.

A vertical recording medium having a magnetic layer formed by sputtering on a nonmagnetic substrate directly or through a soft magnetic thin film such as an alloy containing mainly iron and nickel has been widely employed (see: S. Iwasaki and K. Ouchi; IEEE Transactions on Magnetics, Vol. MAG-14, No. 5, September 1978, pages 849—851, S. Iwasaki, Y. Nakamura and K. Ouchi; IEEE Transactions on Magnetics, Vol. MAG-15, No. 6, November 1979, pages 1456—1458, S. Iwasaki, K, Ouchi and N. Honda; IEEE Transactions on Magnetics, Vol. MAG-16, No. 5, September 1980, pages 1111—1113). The magnetic layer contains Co and Cr as the major constituents and as an axis of easy magnetization in the direction perpendicular to the film surface. If this magnetic layer contains Cr of not more than about 30% by weight, the crystal system has a hexagonal close-packed structure and the C-axis can be vertically oriented on the film surface. Further, saturation magnetization can be decreased until an anisotropic magnetic field in the vertical direction becomes larger than a demagnetizing field. Therefore, a vertically magnetizable film is manufactured.

However, the rate at which the magnetic thin film is formed is low according to the sputtering method. Thus, the vertically magnetizable film can hardly be manufactured at low cost. However, in the vapor deposition method including a method for partially ionizing vaporized atoms from a vapor source such as the ion plating method, the present inventor has found that a Co-Cr vertically magnetizable film can be formed quickly at a rate of several 100 nm/sec. In the vapor deposition method, the substrate is moved along the circumferential surface of a cylindrical can to form a thin film thereon. Then, a vertically magnetizable tape is manufactured with high productivity.

In order to form a Co-Cr deposition film into a vertically magnetizable film, the C-axis of the hexagonal close-packed structure must orient vertically with respect to the film surface and the anisotropic magnetic field in the vertical direction must be larger than the demagnetizing field. For this purpose, it is found in an experiment that an angle of incidence of vaporized atoms must be controlled with reference to a certain limit in vapor deposition.

Furthermore from JP—A—54 141 391 a method for manufacturing a magnetic recording medium is known, wherein an angle of incidence of vapourised atoms is not more than 60° at an initial period or formation of a magnetic film by the vapor deposition method on a substrate which is travelling. Also with this known method the magnetic film contains Co as a major constituent. However, the magnetic film is not a vertically magnetizable film and if Co atoms are deposited on a substrate, a vertically magnetizable film cannot be obtained even if the angle of incidence is set at 0°. This known method is advised for improvement of the scratch strength.

From JP—A—5 361 310 a method for manufacturing a magnetic recording medium is known, according to which a high-molecular product or non-magnetic metallic material is used as a base material. On such base material a ferro-magnetic metallic thin film is arranged as a recording layer. The non-magnetic material is evaporated in a vacuum atmosphere to form a non-magnetic material layer serving as the substrate for the ferro-magnetic metallic thin film product, and the angle subtended between the vapor current and the normal erected on the surface on to which the non-magnetic material is directed is over 30°. In view of the fact that the main constituents of the deposited ferro-magnetic film are Co, Fe, Ni or an alloy thereof this known method is also not useful for manufacturing a vertically magnetizable film.

It is, therefore, an object of the present invention to provide a method for manufacturing a vertical magnetic recording medium, according to which a Co-Cr vertically magnetizable film can be formed quickly at a high rate by the vapor deposition method on a continuous substrate which is travelling.

According to the present invention this object is solved in that

a) when the travelling substrate enters the vapor deposition area the angle of incidence of vaporized atoms is adjusted to be not more than 35°,

b) when the travelling substrate is leaving the vapor deposition area said angle of incidence is increased, and

c) the substrate temperature during vapor deposition is 150°C or more, the angle of incidence being the absolute value of the acute angle formed by a line normal to the film surface and a line parallel to an average incident direction of the vaporized atoms at the location of incidence.

According to the inventive method a vertically magnetizable film can be produced at a high productivity and having excellent magnetic characteristics.

According to an improved embodiment of the inventive method a length between a mask and the substrate is not more than 12 cm, wherein said mask is shielding the vaporized atoms of larger incidence angles from the vapor sources at the initial period of formation of the said magnetic film.

Other objects, features, and advantages of the present invention will be apparent from the following description of preferred embodiments when taken in conjunction with the accompanying drawings.

Brief description of the drawings

Fig. 1 is a view illustrating the arrangement of a vapor deposition device according to one embodiment of the present invention;

Fig. 2 is a graph of hysteresis curves of a Co-Cr film in order to explain magnetization as a function of a magnetic field;

Fig. 3 is a graph for explaining $H_A - 4\pi M_S$ as a function of $\psi_2$ where $H_A$ is the anisotropic magnetic field, $M_S$ is the saturation magnetization and $\psi_2$ is the angle of incidence of vaporized atoms deposited on a substrate at a final period of formation of a magnetic film;

Fig. 4 is a graph for explaining $H_A - 4\pi M_S$ as a function of $\psi_1$ where $\psi_1$ denotes the angle of incidence of vaporized atoms deposited on the substrate at an initial period of formation of the magnetic film;

Fig. 5 is a graph for explaining $H_A - 4\pi M_S$ as a function of I where I is the length between a mask and the substrate; and

Fig. 6 is a view illustrating the arrangement of a vapor deposition device according to another embodiment of the present invention.

Detailed description of the preferred embodiments

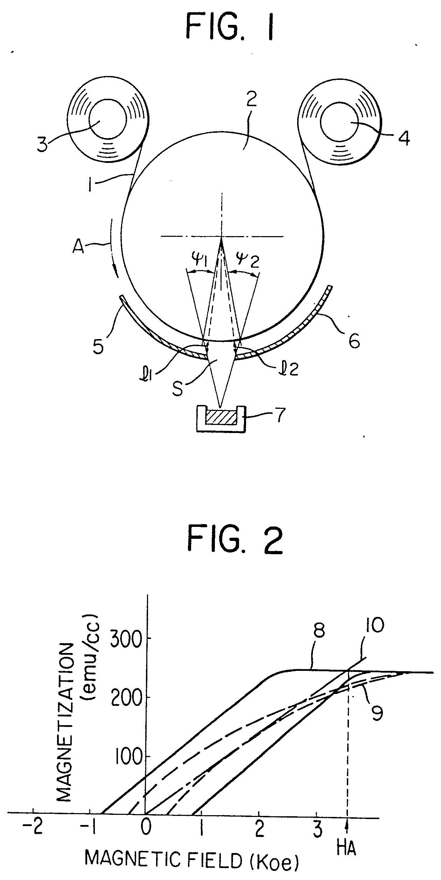

Fig. 1 shows a vapor deposition device according to one embodiment of the present invention. A substrate 1 supplied from a supply roll 3 is fed along the circumferential surface of a cylindrical can 2 in the direction indicated by arrow A. The substrate 1 is then wound on a take-up roll 4. Masks 5 and 6 are disposed between a vapor source 7 and a cylindrical can 2. Vaporized atoms are deposited through a slit S on the substrate 1 which continues to travel. Reference symbol $\psi_1$ denotes an angle of incidence of vaporized atoms at the initial period of formation of a magnetic film. The angle of incidence here means an acute angle formed by a line normal to the film surface and a line parallel to an average incident direction of vaporized atoms deposited on the substrate 1. Reference symbol $\psi_2$ denotes an angle of incidence of the vaporized atoms at the final period of formation of the magnetic layer. The mask 5 shields vaporized atoms having an angle of incidence larger than that of the vapor atoms at the initial period of formation of the magnetic film. Similarly, the mask 6 shields vaporized atoms having an angle of incidence larger than that of the vapor atoms at the final period of formation of the magnetic film. Reference symbol $I_1$ denotes a length between the mask 5 and the substrate 1 and reference symbol $I_2$ denotes a length between the mask 6 and the substrate 1.

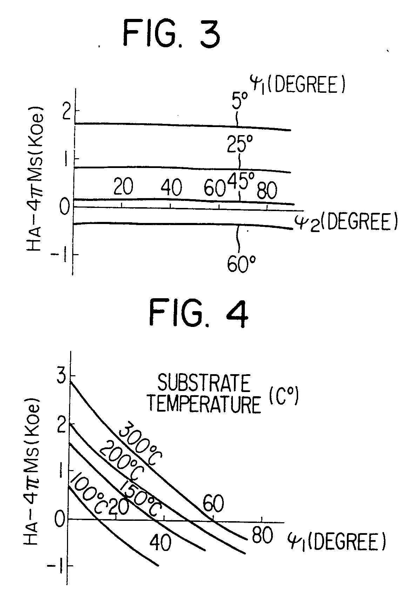

Figs. 3 and 4 respectively show measurement results of an anisotropic magnetic field $H_A$ in the direction perpendicular to the film when the Co-Cr film is formed by changing the angle $\psi_1$ of incidence and the angle $\psi_2$ of incidence. The anisotropic magnetic field $H_A$ of the film is measured as follows. Fig. 2 shows hysteresis curves of the Co-Cr film. Reference numerals 8 and 9 represent hysteresis magnetization curves showing magnetization perpendicular to the film surface and magnetization parallel to the film surface. The anisotropic magnetic field $H_A$ is defined as an intersection between a tangent 10 to the magnetization curve 9 which includes the origin and the saturation magnetization $M_S$. If the anisotropic magnetic field $H_A$ is larger than $4\pi M_S$, the Co-Cr film is a vertically magnetizable film. Fig. 3 shows a relation between the angle $\psi_2$ of incidence and a difference $H_A - 4\pi M_S$, using the angle $\psi_1$ of incidence as the parameter. If the angle $\psi_1$ of incidence is kept constant, the difference $H_A - 4\pi M_S$ is substantially constant even if the angle $\psi_2$ of incidence is changed from 0 to 90°. When the angle $\psi_1$ of incidence is set to 5, 25 and 45°, the difference $H_A - 4\circledR M_S$ is positive. Thus, the Co—Cr film is the vertically magnetizable film. However, when the angle $\psi_1$ of incidence is 60°, the difference $H_A - 4\pi M_S$ becomes negative. The Co-Cr film is not the vertically magnetizable film. The curves in Fig. 3 are plotted when the temperature of the substrate 1 in the deposition process is set to 200°C and Cr of 22% by weight is contained in the deposition film.

Fig. 4 shows a relation between the angle $\psi_1$ of incidence and the difference $H_A - 4\pi M_S$, using the temperature of the substrate 1 in the deposition process as the parameter. Assume that the substrate temperature is set to 100°C. The difference $H_A - 4\pi M_S$ becomes positive when the angle $\psi_1$ of incidence is not more than 13°. Therefore, the Co-Cr film becomes the vertically magnetizable film. However, when the angle $\psi_1$ of incidence is more than 13°, the Co-Cr film is not the vertically magnetizable film. When the substrate temperature is set to 150, 200 and 300°C, the Co-Cr film becomes the vertically magnetizable film when the angle $\psi_1$ of incidence is set to not more than 35, 50 and 60°, respectively. In the above cases, Cr of 22% by weight is contained in the deposition film. When Cr of 22% by weight is contained in the deposition film, the difference $H_A - 4\pi M_S$ is maximized. However, when the substrate temperature becomes higher than 300°C, the difference $H_A - 4\pi M_S$ is smaller than that at 300°C. Therefore, the angle $\psi_1$ of incidence must be not more than 60° to form the Co-Cr vertically magnetizable film.

As is apparent from the above description, if a high polymer such as a polyimide or polyamide is used as a substrate which can be used at a temperature of about 300°C, the Co—Cr vertically magnetizable film can be obtained when the angle $\psi_1$ of incidence is set to not more than 60°. Although a polyethylene terephthalate substrate made of a polyester type high polymer is cheap and widely used as the magnetic tape substrate, it is decomposed at a temperature as high as 300°C. Polyethylene terephthalate cannot be used as the substrate under discussion, although the polyethylene terephthalate substrate is preferably used as the magnetic tape substrate. According to the experimental results, a Co-Cr film can be deposited on the polyethylene terephthalate substrate at a deposition temperature of 150°C without damage due to heat. If the angle $\psi_1$ of incidence is not more than 35°, the vertically magnetizable film can be obtained according to the curve corresponding to a substrate temperature of 150°C in Fig. 4. In other words, if polyethylene terephthalate is used as the substrate, the angle $\psi_1$ of incidence must be not more than 35° to obtain the Co-Cr vertically magnetizable film.

When the Co-Cr film is continuously formed on the substrate 1 which continues to travel in the vapor deposition device shown in Fig. 1, magnetization characteristics of the film only depend on the angle $\psi_1$ of incidence, as is apparent from Figs. 3 and 4, while they substantially do not depend on the angle $\psi_2$ of incidence. As a matter of fact, if the angle of incidence is large, the deposition efficiency and the productivity are high. Therefore, the angle $\psi_1$ of incidence must be small enough to form the Co-Cr vertically magnetizable film, while the angle $\psi_2$ may be greater than the angle $\psi_1$ of incidence since the magnetization characteristics substantially do not depend on the angle $\psi_2$ of incidence. Thus, the Co-Cr vertically magnetizable film having an excellent deposition efficiency is obtained.

The magnetization characteristics of the Co-Cr film are influenced by the length $l_1$ between the mask 5 and the substrate 1 and the length $l_2$ between the mask 6 and the substrate 1 to be described below. In the experiments described above, the lengths $l_1$ and $l_2$ are respectively 2 cm. Since the lengths $l_1$ and $l_2$ are the same, they are respectively referred to as a length $l$ hereinafter unless otherwise specified.

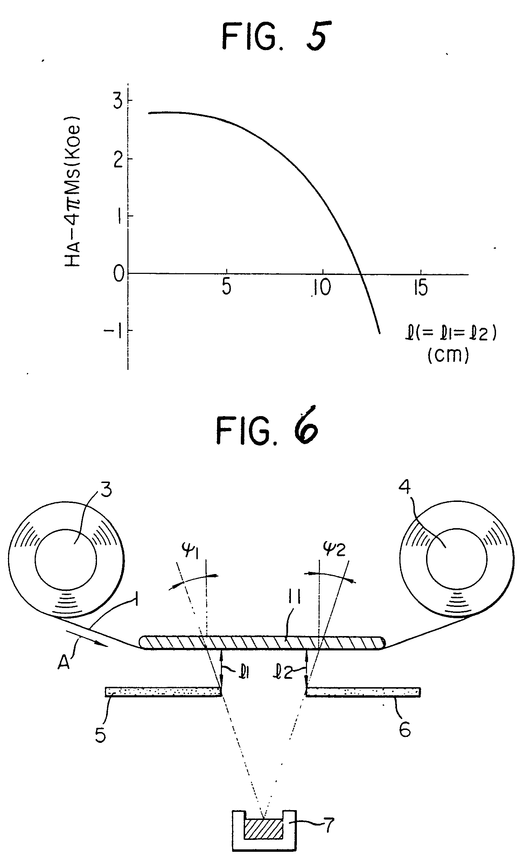

The measured results of the difference $H_A-4\pi M_S$ of the Co-Cr film when the length $l$ is changed are shown in Fig. 5. The substrate temperature was 300°C, the angle $\psi_1$ of incidence was 0°, and the angle $\psi_2$ of incidence was 20°. If the substrate temperature is set except for 300°C or if the angle $\psi_1$ of incidence is set to except for 0°, the difference $H_A-4\pi M_S$ is plotted as a curve the level of which is lower than the curve in Fig. 5. Referring to Fig. 5, when the length $l$ is increased, the difference $H_A-4\pi M_S$ becomes small. Thus, the length $l$ must be shorter than 12 cm to obtain the vertically magnetizable film. The partial dependence of the difference $H_A-4\pi M_S$ on the length $l$ may be attributable to the fact that evaporated atoms may not be emitted straight and deposited on the substrate 1. The above results are obtained when the length $l_1$ is the same as the length $l_2$.

Even if the length $l_1$ is not more than 12 cm and the length $l_2$ is more than 12 cm, the results are substantially the same as those at the length $l$. Therefore, the length $l_1$ must be not more than 12 cm to obtain the vertically magnetizable film.

In the above description, the substrate 1 is moved along the circumferential surface of the cylindrical can 2 to form the thin film on the substrate 1. A substantially same thin film can be obtained when the substrate 1 is move along a flat plate 11, as shown in Fig. 6. The angle $\psi_1$ of incidence and the angle $\psi_2$ of incidence, and the lengths $l_1$ and $l_2$ are illustrated in Fig. 6. In the above embodiments, one vapor source is used to evaporate Co and Cr. However, since the vapor pressures of Co and Cr differ from each other, it is difficult to form an elongate Co-Cr vertically magnetizable film having a uniform composition. In order to obtain a uniform elongate Co-Cr vertically magnetizable film, Co and Cr are preferably evaporated from separate vapor sources. In this case, since the number of Co evaporated atoms is considerably larger than that of Cr evaporated atoms (Cr of about 20 atm.% is preferred in the Co-Cr vertically magnetizable film), the characteristics of the film are substantially determined by the angle of incidence of Co atoms. In the deposition method using one vapor source, the angle of incidence is determined as an acute angle between a line normal to the film surface and a line parallel to the average incidence direction of the atoms deposited on the substrate 1. However, in the deposition method using two vapor sources, the angle of incidence is defined as an angle between the line normal to the film surface and a line parallel to the average incidence direction of the Co atoms deposited on the substrate 1. The manufacturing conditions used in the method using one vapor source can also be used.

In summary, in the vapor deposition method according to the present invention, the angle of incidence of the evaporated atoms deposited on the substrate is determined properly to continuously form the Co-Cr vertically magnetizable film with an excellent deposition rate.

**Claims**

1. A method for manufacturing a vertical magnetic recording medium, comprising a magnetic film on a substrate, said magnetic film containing Co and Cr as major constituents and having an axis of easy magnetization normal to the surface thereof, using a vapor deposition method with travelling substrate, characterized in that

a) when the travelling substrate enters the vapor deposition area the angle of incidence of vaporized atoms is adjusted to be not more than 35°,

b) when the travelling substrate is leaving the vapor deposition area said angle of incidence is increased, and

c) the substrate temperature during vapor deposition is 150°C or more, the angle of incidence being the absolute value of the acute angle formed by a line normal to the film surface and a line parallel to an average incident direction of the vaporized atoms at the location of incidence.

2. A method according to claim 1, wherein a length between a mask and said substrate is not more than 12 cm, said mask shielding the vaporized atoms of larger incident angles from the vapor sources at the initial period of formation of said magnetic film.

## Patentansprüche

1. Verfahren zur Herstellung eines vertikalen magnetischen Aufzeichnungsmediums, mit einer magnetischen Schicht auf einem Substrat, wobei die magnetische Schicht Co und Cr als Hauptbestandteile enthält und eine Achse der leichten Magnetisierung senkrecht zu deren Oberfläche hat, wobei ein Bedampfungsverfahren mit bewegten Substraten benutzt wird, dadurch gekennzeichnet, daß

a) wenn das bewegte Substrat in den Bedampfungsbereich eintritt, der Einfallswinkel der verdampften Atome auf nicht mehr als 35° festgelegt ist,

b) wenn das bewegte Substrat den Bedampfungsbereich verläßt, der Einfallswinkel vergrößert wird, und

c) die Substrattemperatur während der Bedampfung 150°C oder mehr beträgt, wobei der Einfallswinkel der Absolutwert des spitzen Winkels ist, der durch eine Linie senkrecht zu der Oberfläche der Schicht und eine Linie parallel zu einer mittleren Einfallsentfernung der verdampften Atome am Einfallsort gebildet ist.

2. Verfahren nach Anspruch 1, dadurch gekennzeichnet, daß der Abstand zwischen einer Maske und dem Substrat nicht mehr als 12 cm ist, wobei in der Anfangszeit der Bildung der magnetischen Schicht die verdampften Atome von der Bedampfungsquelle mit größerem Einfallswinkel von der Maske abgeschirmt werden.

## Revendications

1. Procédé de fabrication d'un support d'enregistrement magnétique vertical, comportant une pellicule magnétique sur un substrat, ladite pellicule magnétique contenant Co et Cr comme constituants principaux et possédant un axe de magnétisation facile normal à sa surface, en utilisant un procédé de dépôt de vapeur avec un substrat en déplacement, caractérisé en ce que

a) lorsque le substrat en déplacement pénètre dans la zone de dépôt de vapeur, l'angle d'incidence des atomes vaporisés est réglé pour ne pas être supérieure à 35°,

b) lorsque le substrat en déplacement quitte la zone de dépôt de vapeur, ledit angle d'incidence est augmenté, et

c) la température du substrat durant le dépôt de vapeur est 150°C ou plus, l'angle d'incidence étant la valeur absolue de l'angle aigu formé par une droite normale à la surface de la pellicule et une droite parallèle à une direction d'incidence moyenne des atomes vaporisés au point d'incidence.

2. Procédé selon la revendication 1, dans lequel la longueur entre un masque et ledit substrat n'est pas supérieure à 12 cm, ledit masque faisant écran pour les atomes vaporisés d'angle d'incidence supérieur provenant des sources de vapeur durant la période initiale de formation de ladite pellicule magnétique.

# FIG. I

# FIG. 2

# FIG. 3

# FIG. 4

# FIG. 5

# FIG. 6